Europäisches Patentamt

European Patent Office

Office européen des brevets

(11) Publication number: **0 072 192**
A1

# EUROPEAN PATENT APPLICATION

(21) Application number: **82304104.1**

(22) Date of filing: **04.08.82**

(51) Int. Cl.³: **F 16 D 65/04,** F 16 D 55/02,
F 16 D 55/22

(30) Priority: **12.08.81 GB 8124639**

(43) Date of publication of application: **16.02.83**
**Bulletin 83/7**

(84) Designated Contracting States: **BE DE FR GB IT SE**

(71) Applicant: **AUTOMOTIVE PRODUCTS PUBLIC LIMITED
COMPANY, Tachbrook Road, Leamington Spa
Warwickshire CV31 3ER (GB)**

(72) Inventor: **Hodkinson, Harold, 54 St. Martins Road,
Finham Coventry West Midlands (GB)**

(74) Representative: **Farrow, Robert Michael, Patent
Department Automotive Products plc Tachbrook Road,
Leamington Spa Warwickshire CV31 3ER (GB)**

(54) Friction pad assembly for a sliding caliper disc brake.

(57) A friction pad assembly for use in a disc brake caliper comprises the usual backing plate (11) and pad of friction material (12). A spring (17) engaged over a pin (16) is provided to bias the pad assembly into the caliper to prevent rattle. The spring has arms extending substantially in the same direction one each being for abutment with the backing plate (11) and caliper body. In a preferred embodiment two such springs (17, 18) are engaged over the pin (16) facing in generally opposite directions.

-1-

## "Friction Pad Assembly for a Sliding Caliper Disc Brake"

This invention relates to friction pad assemblies for sliding caliper disc brakes.

Friction pad assemblies usually comprise a steel backing plate having a friction lining bonded thereto. Two such assemblies are mounted in a brake caliper for movement towards one another to clamp a brake disc on application of the brake. The pads must be allowed limited free movement to both allow braking reaction forces to be transmitted to the caliper and to prevent seizure of the pad in its mounting. It has become common to provide a spring to bias the pad into the caliper to prevent rattle.

Existing springs are not altogether satisfactory. British Patent No. 1 533 976 (Girling) lists the following disadvantages common to then prior art springs:-

1. They do not exert substantially the same force between the pad and the guide throughout the life of the pad.

0072192

-2-

2.   They are not easy to assemble in and dismantle from a brake.

3.   They give rise to spurious loads and couples that tend to displace the pad from the desired position and attitude in a brake caliper.

4.   They cut or otherwise damage the flexible rubber boots which are provided to protect the piston or pistons in a brake caliper.

5.   They are not particularly cheap to manufacture or install.

6.   They take up space which could be usefully filled by other brake components to enhance brake performance, particularly the rigidity of the brake.

British Patent No. 1 533 976 proposes one solution to the above disadvantages.

The present invention seeks to provide an improved friction pad assembly which has several advantages over that disclosed in British Patent No. 1 533 976.

-3-

Accordingly to the invention there is provided a friction pad assembly for use in a disc brake caliper and comprising a backing plate having a pad of friction material secured thereto, a pin secured to the backing plate and a wire spring having a coiled region engaged over the pin and two free end regions, characterised thereby that the two free end regions extend in substantially the same direction, one end region being for abutment with the backing plate and the other end region being for abutment with the disc brake caliper.

Such an arrangement relieves the pin of spring load since the arms of spring act directly between the caliper and the pad backing plate. The pin merely locates and holds the spring in the operational position. This has the advantage that the twisting moment exerted on the prior art pad assembly by spring load being directed through the pin to the backing plate is substantially eliminated.

In one embodiment two of said wire springs are engaged over said pin, the respective two ends of each spring extending in generally opposite directions.

-4-

This arrangement has the advantage that should one spring break, the remaining spring will retain the pad assembly in its correct position in the caliper.

Furthermore, the springs can be nested on the pin to prevent rocking movement which ensures that the springs cannot be displaced to a wrong position prior to fitting the assemblies in the caliper.

Other features of the invention are disclosed in the following description of a preferred embodiment shown, by way of example only, in the accompanying drawings in which:-

Fig. 1 is a front view of a brake pad assembly according to the invention;

Fig. 2 is a transverse section through the assembly of Fig. 1 on the line A-A;

Fig. 3 is a plan view of the assembly of Fig. 1;

Fig. 4 is a front view of a spring for use in the pad assembly of Fig. 1;

-5-

Fig. 5 is an end view of the spring of Fig. 4;

Fig. 6 is a plan view of the spring of Fig. 4;

Fig. 7 is a plan view of a sliding caliper disc brake incorporating two pad assemblies of Fig. 1;

Fig. 8 is a transverse section through the caliper of Fig. 7 on the line B-B; and

Fig. 9 is a transverse section through the caliper of Fig. 7 on the line C-C.

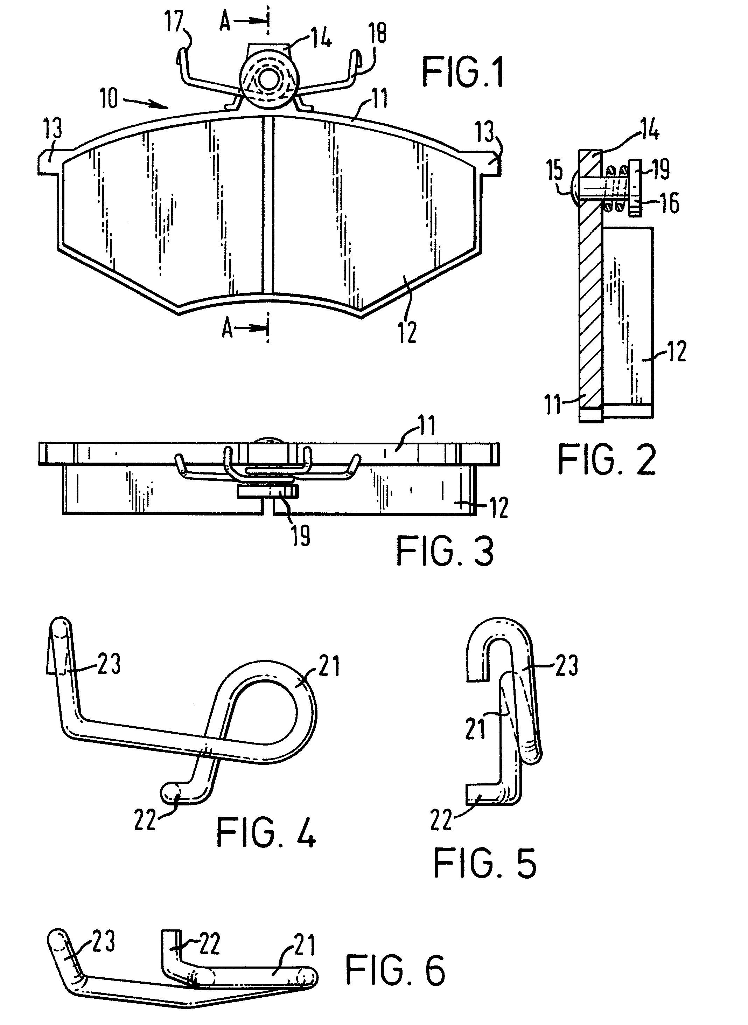

With reference to Figs. 1-3 of the drawings there is shown a friction pad assembly 10 comprising a backing plate 11 having a pad of friction material 12 bonded thereto. The backing plate 11 has ears 13 for location of the assembly in a brake caliper and an upstanding lug 14 having a hole 15 pierced therethrough.

A pin 16 is riveted through the hole 15 to retain two wire springs 17,18 to the backing plate 11. The springs are retained by a head 19 of the pin.

-6-

Spring 17 is shown in greater detail in Figs. 4-6. A coiled region 21 through which the pin 16 is intended to pass terminates in a short arm 22 and a long arm 23, both arms extending in substantially the same direction.

The short arm 22 is cranked away from the plane of the coil region for abutment with the backing plate 11, as shown in Fig. 1. The long arm 23 is bent up and away from the coiled region to terminate in an inverted generally 'U' shape for abutment with the bridge of the brake caliper. The particular shape of the spring is not important, for example the long arm may extend round the pin 16 in a clockwise direction to the short arm, so long as the arms extend in generally the same direction. The abutting ends of each spring should be substantially in the same plane to avoid a twisting moment on the brake pad.

Spring 18 is a mirror image spring whose arms extend in the opposite direction to those of spring 17. The springs conveniently nest around one another on the pin 16 to lock themselves against the backing plate and prevent relative movement therebetween. This ensures that the springs cannot be displaced to a wrong position prior to fitting the assemblies in the caliper.

It is advantageous for the cross over point of the long and short arms to be kept between the head of the pin 16 and the lug 14. This ensures free spring movement on installation but any attempt to displace the arms otherwise will tend to increase the number of wire gauges between the pin head and lug, thus resisting such movement. In use the allowance between the backing plate and the pin head is greater than two but less than three wire gauges.

The spring disclosed in British Patent No. 1 533 976 has the alleged advantage that the stress is distributed around the whole of the coiled region 21 thus achieving maximum metal utilisation. The spring of the present invention satisfies the same criteria and has the additional advantage that on installation the spring load does not react on the pin 16 but directly via the short arm 22 on to the backing plate 11. This arrangement relieves the pin of any transmitted load and results in more stable location of the pad assembly

-8-

with substantial elimination of any twisting moment exerted thereon.

Provision of two springs 17,18 ensures that should one spring break, the remaining spring will retain the pad in its operative position.

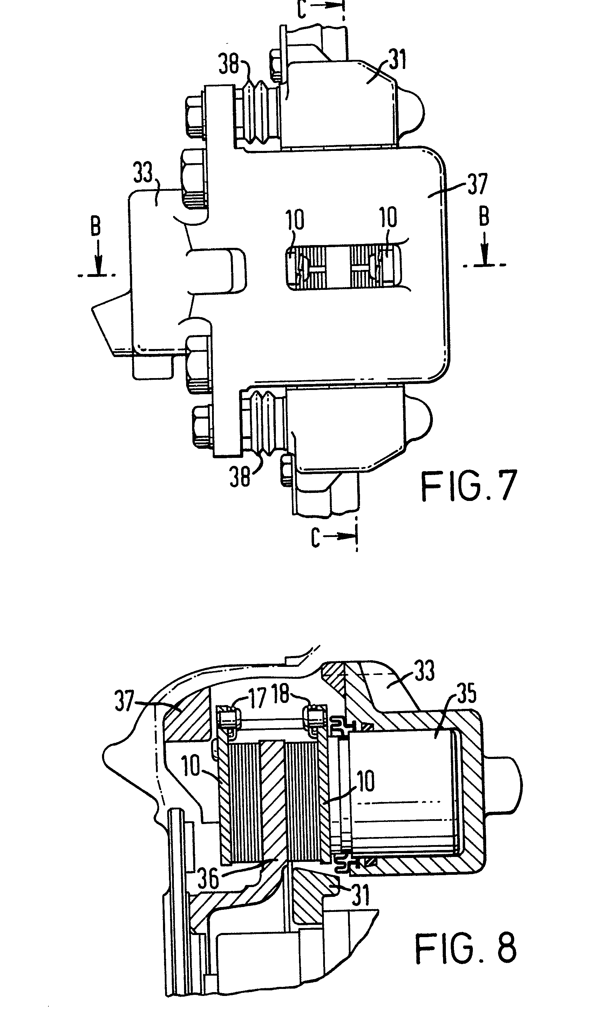

Figures 7-9 show a sliding pin caliper suitable for receiving the pad assemblies of Fig. 1. The caliper comprises a frame member 31 attached by bolts 32 to a vehicle stub axle assembly. A hydraulic cylinder assembly 33 is mounted for transverse movement of the frame member 31 on two guide pins 34. The assembly 33 includes a piston 35, for directly urging one brake pad assembly 10 against a brake disc 36, and a bridge member 37 extending over the disc to urge another pad assembly 10 against the disc by reaction. The pins 34 have boots 38 for protection.

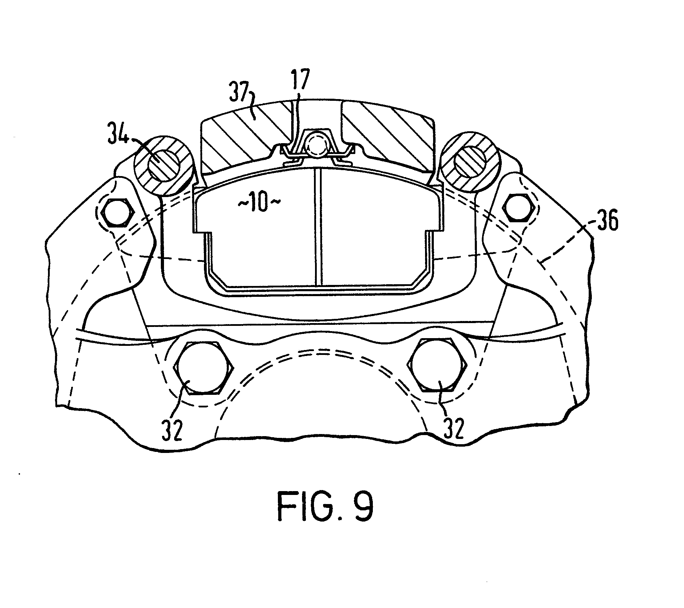

Fig. 9 shows an installed brake pad assembly, the wire springs both retaining the pad assembly in its correct position and biasing the frame member 31 and cylinder assembly 33 apart to prevent rattle therebetween.

-9-

The brake pad assemblies may be replaced by removing one of the guide pins 34 to allow the cylinder assembly 33 to pivot around the remaining pin.

Although the invention has been described with each pad assembly having two springs, a pad assembly having only one spring is within the scope of the invention.

The short arm 22 may be extended to a point substantially below the load bearing extremity of the long arm 23 to reduce the side load on the pin 16.

-10-

## Claims

1.      A friction pad assembly for use in a disc brake caliper and comprising a backing plate (11) having a pad of friction material (12) secured thereto, a pin (16) secured to the backing plate (11) and a wire spring (17) having a coiled region engaged over the pin and two free end regions, characterised thereby that the two free end regions extend in substantially the same direction, one end region being for abutment with the backing plate and the other end region being for abutment with the disc brake caliper.

2.      A friction pad assembly according to Claim 1, characterised thereby that two of said wire springs (17,18) are engaged over said pin (16) the respective two ends of each spring extending in generally opposite directions.

3.      A friction pad assembly according to Claim 2, characterised thereby that the pin (16) has a head (19) to retain the springs (17,18) the allowance between the backing plate and the underside of the pin head being greater than two but less than three gauges of the spring wire.

FIG.1

FIG. 2

FIG. 3

FIG. 4

FIG. 5

FIG. 6

FIG.7

FIG. 8

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| D,Y | FR-A-2 296 127 (GIRLING) <br> * Page 5, lines 10-31; figures 1-7 * & GB - A - 1 533 976 <br> --- | 1-3 | F 16 D 65/04 <br> F 16 D 55/02 <br> F 16 D 55/22 |
| Y | GB-A- 984 315 (CAMPAGNOLO) <br> * Page 1, lines 72-89; figures 1,2 * <br> --- | 1 | |
| A | FR-A-2 252 034 (FERODO) <br> * Page 7, lines 14-21; figures 3,5,7 * & US - A - 3 970 172 <br> --- | 1 | |
| A | US-A-4 061 209 (GEE) <br> --- | | |
| A | FR-A-2 371 606 (GIRLING) <br> & GB - A - 1 590 631 <br> --- | | TECHNICAL FIELDS SEARCHED (Int. Cl. ³) |
| A | GB-A-2 027 141 (LUCAS) <br> --- | | F 16 D |
| A | FR-A-2 115 838 (O.M.D.S.) <br> * GB - A - 1 327 527 <br> --- | | |
| A | DE-A-1 475 372 (JURID) <br> . <br> --- -/- | | |

The present search report has been drawn up for all claims

| Place of search <br> THE HAGUE | Date of completion of the search <br> 12-11-1982 | Examiner <br> KIESLINGER J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## EUROPEAN SEARCH REPORT

| | DOCUMENTS CONSIDERED TO BE RELEVANT | | Page 2 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | DE-A-2 334 232 (TEVES)<br><br>----- | | |

**European Patent Office**

TECHNICAL FIELDS SEARCHED (Int. Cl. 3)

The present search report has been drawn up for all claims

| Place of search<br>THE HAGUE | Date of completion of the search<br>12-11-1982 | Examiner<br>KIESLINGER J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82